# EUROPÄISCHE PATENTANMELDUNG

(11) **EP 0 546 430 A1**
(43) Veröffentlichungstag der Anmeldung: **16.06.1993**
(21) Anmeldenummer: 92120515.9
(22) Anmeldetag: 02.12.1992
(51) Int. Cl.: B60T 8/18

(54) **Vorrichtung zur lastabhängigen Regelung des Bremsdruckes eines Fahrzeug-Doppelachsaggregates**

(30) Priorität: 10.12.1991 DE 4140592
(71) Anmelder: IVECO MAGIRUS AG, D-89079 Ulm (DE)
(72) Erfinder: Egetö, Bela, W-7959 Achstetten-Stetten (DE)
(74) Vertreter: TER MEER - MÜLLER - STEINMEISTER & PARTNER

(57) **Zusammenfassung**

2.1. Bekannte lastabhängige Bremsdruck-Regelvorrichtungen besitzen ein Übersetzungsgestänge, welches am Fahrzeugquerträger befestigt ist. Diese Befestigungsart ist kompliziert und kostenträchtig, da Einbauraum der Hebelübersetzungen freigehalten werden muß.

2.2. Es wird vorgeschlagen, das Übersetzungsgestänge der Bremsdruck-Regelvorrichtung (10) an einer Anlenkstelle (3) des fahrzeugfesten Bremskraftreglers (9) selbst zu befestigen. Eine derartige Konstruktion schafft einen einfachen mechanischen Aufbau mit wenigen Einzelteilen, wobei die Wirksamkeit des Bremskraftreglers verbessert wird.

## Beschreibung

Die Erfindung betrifft eine Vorrichtung zur lastabhängigen Regelung des Bremsdruckes an der ersten und der zweiten Hinterachse eines Fahrzeug-Doppelachsaggregates mittels eines fahrzeugfesten Bremskraftreglers, der über eine Steuerstange und ein Übersetzungsgestänge steuerbar ist, wobei die Steuerstange am unteren Ende an einer Geberstange angelenkt ist, welche ihrerseits mit den beiden Hinterachsen gelenkig verbunden ist.

Aus DE 33 22 702 A1 ist eine Bremsdruck-Regelvorrichtung der vorgenannten Art bekannt, bei der das Übersetzungsgestänge für eine bremsdruckverstärkende Verstellung des Reglerhebels am Fahrzeugquerträger befestigt ist. Diese Befestigungsart ist kompliziert und kostenträchtig, da Einbauraum der Hebelübersetzungen freigehalten werden muß.

Aufgabe der Erfindung ist die Schaffung einer Bremsdruck-Regelvorrichtung der eingangs genannten Art, bei der mit Hilfe einfacher Mittel Einbauraum am Fahrzeugrahmen eingespart werden kann und gleichwohl ein zuverlässiger Betrieb eines Bremskraftreglers ermöglicht ist.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 10.

Wesen der Erfindung ist, das mit dem Reglerhebel gelenkig verbundene Übersetzungsgestänge am Bremskraftregler selbst anzulenken, wobei die Anlenkstelle insbesondere eine Fahrzeugrahmen-Befestigungsstelle des Bremskraftreglers ist.

Zweckmäßigerweise ist vorgesehen, daß die Anlenkstelle des Übersetzungsgestänges am Bremskraftregler eine Lagerkonsole umfaßt, die mit einem Befestigungsbolzen der Fahrzeugrahmen-Befestigungsstelle des Bremskraftreglers verschraubt oder fest verbunden, insbesondere verschweißt, ist.

Das Übersetzungsgestänge umfaßt zweckmäßigerweise einen mit der Steuerstange gelenkig verbundenen einseitigen Gestängehebel, dessen eines Ende die Anlenkstelle des Übersetzungsgestänges am Bremskraftregler aufweist und dessen anderer Endbereich über eine Koppelstange mit dem freien Ende des Reglerhebels gelenkig verbunden ist.

Für eine Einstellung des Bremskraftreglers sind vorzugsweise mehrere Verstelleinrichtungen vorgesehen. So kann insbesondere die Koppelstange zwischen dem Gestängehebel und dem Reglerhebel längenverstellt werden, wie auch die Anlenkstelle der Steuerstange am Gestängehebel längs des Gestängehebels verstellt werden kann. Ferner kann vorgesehen sein, die Anlenkstelle der Koppelstange am Reglerhebel längs des Reglerhebels zu verstellen, und es kann vorgesehen sein, die Steuerstange selbst in ihrer Länge zu verstellen. So kann insbesondere der Reglerhebel und der Gestängehebel parallel zueinander min Abstand angeordnet werden, wobei beide Hebel gleiche wirksame Hebellängen besitzen. Bei Verstellung der Anlenkstelle der Steuerstange am Gestängehebel können unterschiedliche Übersetzungsverhältnisse eingestellt werden.

Besonders zweckmäßig ist es, wenn das Übersetzungsgestänge in einer im wesentlichen vertikalen Ebene gelegen ist, in der auch die Steuerstange liegt. Hierbei sind Gestängehebel und Reglerhebel bezüglich der Vertikalebene nur geringfügig voneinander versetzt, so daß die Steuerstange dicht am Reglerhebel ohne Berührung desselben vorbeigeführt ist. Der Gestängehebel befindet sich zweckmäßigerweise exakt über dem Reglerhebel, wobei beide Hebel voneinander beabstandet sind.

Durch die Erfindung ist ein einfacher mechanischer Aufbau mit wenigen Einzelteilen gegeben. Der Bremskraftregler, dessen Wirksamkeit gegenüber der eingangs genannten bekannten Ausführungsform verbessert ist, ist sehr zuverlässig im Betrieb und wartungsfrei. Am Fahrzeugrahmen wird kein Einbauraum für das Übersetzungsgestänge benötigt. Es ergibt sich eine einfache Montage eines Bremskraftreglers, wobei auch mit Hilfe einfacher Mittel ein Übersetzungsgestänge an einem Bremskraftregler nachgerüstet werden kann. Besonderer Vorteil ist, daß unerwünschte größere Kräfte, welche auf die Steuerstange im wesentlichen in Vertikalrichtung einwirken, von der Anlenkstelle bzw. Lagerstelle des Übersetzungsgestänges am Bremskraftregler aufgefangen werden und nicht die Bremskraftregelung beeinträchtigen.

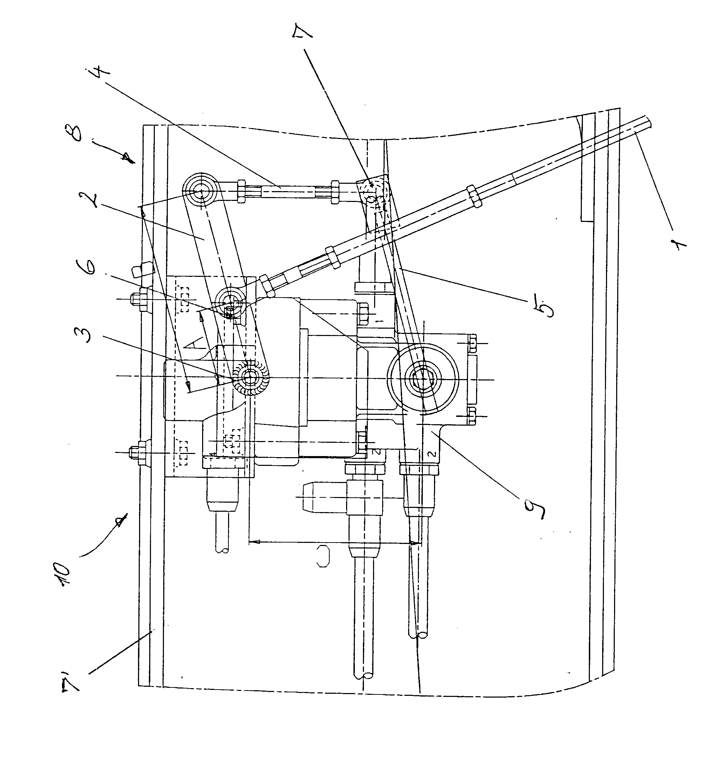

Die Erfindung wird nachfolgend anhand eines Ausführungsbeispiels unter Bezugnahme auf die beigefügte Zeichnung näher erläutert, deren einzige Figur eine schematische Seitenansicht eines Bremskraftreglers mit Übersetzungsgestänge zeigt.

Gemäß Zeichnung ist ein Bremskraftregler (9) hängend am Fahrzeugrahmen (7') befestigt.

Der Bremskraftregler (9) besitzt eine Vorrichtung (10) zur lastabhängigen Regelung des Bremsdruckes, welche den Bremsdruck an der ersten und der zweiten Hinterachse eines Fahrzeug-Doppelachsaggregates regelt.

Die mit beiden Hinterachsen gelenkig verbundene (nicht veranschaulichte) Geberstange ist mit einer Steuerstange (1) und letztere oberseitig mit einem Übersetzungsgestänge (8) gelenkig verbunden, welches am Bremskraftregler selbst angelenkt ist. Die Anlenkstelle (3) des Übersetzungsgestänges am Bremskraftregler ist eine (ohnehin vorhandene) Fahrzeugrahmen-Befestigungsstelledes Bremskraftreglers, so daß diese nicht zusätzlich eingerichtet werden muß. An der Anlenkstelle ist eine Lagerkonsole angebracht, welche das eine Ende eines einseitigen Gestängehebels (2) des Übersetzungsgestänges (8) gelenkig befestigt. Das andere freie Ende des einseitigen Gestängehebels (2) bildet eine Gelenkstelle für eine im wesentlichen vertikal angeordnete Koppelstange (4) des Übersetzungsgestänges, wobei das untere Ende der Koppelstange (4) am freien Ende des Reglerhebels (5) des Bremskraftreglers (9) gelenkig befestigt ist. Letztgenannte Anlenkstelle (7) kann bezüglich der Länge des Reglerhebels (5) verstellt werden, wie auch die Länge der Koppelstange (4) eingestellt werden kann.

Zwischen den endseitigen Anlenkstellen des einseitigen Gestängehebels (2) ist in der verstellbaren Anlenkstelle (6) das obere Ende der Steuerstange (1) angelenkt.

Die Bremskraftregelung funktioniert wie alle lastabhängigen Regelungssysteme mit Übersetzungsgestänge, welches gerade bei härteren Hinterfedern nötig ist, um auch kleinere Federwege wirksam zum Reglerhebel zu übersetzen. Das Übersetzungsverhältnis kann beliebig durch den Hebelarm A bezüglich Hebelarm B eingestellt werden, wobei auch die Länge der Koppelstange (4) beispielsweise auf die Länge C (Abstand der Lagerungen der Hebel 2 und 5) eingestellt werden kann.

Im Betrieb wird die Steuerstange (1) durch das lastabhängige Ein- und Ausfedern der Hinterachse betätigt, wobei der Gestängehebel (2) geschwenkt wird. Durch das Übersetzungsverhältnis B/A werden auch kleinere Federwege registriert, wobei unerwünschte größere Kräfte, die auf den Bremskraftregler (9) wirken, nicht die bremsdruckverstärkende Wirkung beeinträchtigen. Der Reglerhebel (5) ist insbesondere auf die Länge B des einseitigen Gestängehebels (2) eingestellt.

Alle in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.

## Patentansprüche

1. Vorrichtung (10) zur lastabhängigen Regelung des Bremsdruckes an der ersten und der zweiten Hinterachse eines Fahrzeug-Doppelachsaggregates mittels eines fahrzeugfesten Bremskraftreglers (9), der über eine Steuerstange (1) und ein Übersetzungsgestänge (8) steuerbar ist, wobei die Steuerstange (1) am unteren Ende an einer Geberstange angelenkt ist, welche ihrerseits mit den beiden Hinterachsen gelenkig verbunden ist,
dadurch gekennzeichnet, daß das mit dem Reglerhebel (5) gelenkig verbundene Übersetzungsgestänge (8) am Bremskraftregler (9) selbst angelenkt ist.

2. Vorrichtung nach Anspruch 1,
dadurch gekennzeichnet,
daß die Anlenkstelle (3) des Übersetzungsgestänges (8) am Bremskraftregler (9) eine Fahrzeugrahmen-Befestigungsstelle des Bremskraftreglers ist.

3. Vorrichtung nach Anspruch 2,
dadurch gekennzeichnet,
daß die Anlenkstelle (3) am Bremskraftregler eine Lagerkonsole umfaßt, die mit einem Befestigungsbolzen der Fahrzeugrahmen-Befestigungsstelle des Bremskraftreglers verschraubt oder fest verbunden, insbesondere verschweißt, ist.

4. Vorrichtung nach einem der Ansprüche 1 bis 3,
dadurch gekennzeichnet,
daß das Übersetzungsgestänge (8) einen mit der Steuerstange (1) gelenkig verbundenen einseitigen Gestängehebel (2) umfaßt, dessen eines Ende die Anlenkstelle (3) des Übersetzungsgestänges am Bremskraftregler aufweist und dessen anderer Endbereich über eine Koppelstange (4) mit dem freien Ende des Reglerhebels (5) gelenkig verbunden ist.

5. Vorrichtung nach Anspruch 4,
dadurch gekennzeichnet,
daß die Koppelstange (4) längenverstellbar ist.

6. Vorrichtung nach einem der Ansprüche 1 bis 5,
dadurch gekennzeichnet,
daß das Übersetzungsgestänge (8) in einer im wesentlichen vertikalen Ebene gelegen ist, in der auch die Steuerstange (1) liegt.

7. Vorrichtung nach einem der Ansprüche 4 bis 6,
dadurch gekennzeichnet,
daß die Anlenkstelle (6) der Steuerstange (1) am Gestängehebel (2) längs des Gestängehebels verstellbar ist.

8. Vorrichtung nach einem der Ansprüche 4 bis 7,
dadurch gekennzeichnet,
daß die Anlenkstelle (7) der Koppelstange (4) am Reglerhebel (5) längs des Reglerhebels verstellbar ist.

9. Vorrichtung nach Anspruch 7 oder 8,
dadurch gekennzeichnet,
daß die Steuerstange (1) längenverstellbar ist.

10. Vorrichtung nach einem der Ansprüche 4 bis 8,
dadurch gekennzeichnet,
daß der Reglerhebel (5) und der Gestängehebel (2) parallel zueinander angeordnet sind und gleiche wirksame Hebellängen besitzen.
